(19) Europäisches Patentamt
European Patent Office
Office européen des brevets

(11) EP 4 076 982 B1

(12) # FASCICULE DE BREVET EUROPEEN

(45) Date de publication et mention de la délivrance du brevet:
**07.02.2024 Bulletin 2024/06**

(21) Numéro de dépôt: **20842714.6**

(22) Date de dépôt: **09.12.2020**

(51) Classification Internationale des Brevets (IPC):
***B60C 1/00*** (2006.01) ***C08L 7/00*** (2006.01)

(52) Classification Coopérative des Brevets (CPC):
(C-Sets disponibles)
**B60C 1/0025; B60C 1/00; C08L 7/00** (Cont.)

(86) Numéro de dépôt international:
**PCT/FR2020/052352**

(87) Numéro de publication internationale:
**WO 2021/123566 (24.06.2021 Gazette 2021/25)**

(54) **COMPOSITION DE CAOUTCHOUC**

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2019 FR 1914471**

(43) Date de publication de la demande:
**26.10.2022 Bulletin 2022/43**

(73) Titulaire: **COMPAGNIE GENERALE DES ETABLISSEMENTS MICHELIN**
**63040 Clermont-Ferrand (FR)**

(72) Inventeurs:
- **LEMERLE, Frédéric**
**63040 CLERMONT-FERRAND CEDEX 9 (FR)**
- **CEREDE, Benoit**
**63040 CLERMONT-FERRAND CEDEX 9 (FR)**
- **ARAUJO-DA-SILVA, José-Carlos**
**63040 CLERMONT-FERRAND CEDEX 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2014/114607 WO-A1-2018/162855**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 076 982 B1

(52) Classification Coopérative des Brevets (CPC):
(Cont.)

C-Sets
**C08L 7/00, C08L 23/08, C08L 91/00, C08K 3/04, C08K 5/18, C08K 5/3437, C08K 5/09, C08K 3/22, C08K 3/06, C08K 5/47**

## Description

Le domaine de la présente invention est celui des compositions de caoutchouc renforcées de noir de carbone et comportant un élastomère diénique fortement saturé, les compositions de caoutchouc étant particulièrement destinées à être utilisées dans un pneumatique, plus particulièrement dans un flanc de pneumatique.

Un pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un flanc est une couche élastomère disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.

Dans la fabrication conventionnelle d'un pneumatique, les différents composants constitutifs du sommet, de l'armature de carcasse, des bourrelets et des flancs sont assemblés pour former un bandage de pneumatique. L'étape d'assemblage est suivie d'une étape de conformation du bandage pour donner la forme torique à l'assemblage avant l'étape de cuisson sous presse.

Les pneumatiques, et notamment les flancs, sont soumis à de nombreuses sollicitations mécaniques qui sont répétées de façon cyclique lors du roulage. Ces sollicitations, sous forme de contraintes de flexion et de compression, éprouvent l'endurance du pneumatique et contribuent à diminuer sa durée de vie. Une façon pour améliorer l'endurance du pneumatique réside en l'augmentation de la résistance à la fatigue des compositions de caoutchouc qui constituent le pneumatique. Par exemple, l'utilisation de silice de faible surface spécifique typiquement inférieure à 125 $m^2/g$, voire très inférieure à 100 $m^2/g$ dans une composition de caoutchouc est décrite respectivement dans les brevets EP 722 977 B1 et EP 547 344 B1 pour être favorable à la résistance à la fatigue.

Par ailleurs, les flancs de pneumatique sont également exposés à l'action de l'ozone. Les cycles de déformation conjugués à l'action de l'ozone peuvent faire apparaître des craquelures ou fissures dans le flanc, empêchant l'utilisation du pneumatique indépendamment de l'usure de la bande de roulement. Par conséquent, il est recherché des compositions de caoutchouc qui soient très cohésives pour constituer par exemple des flancs de pneumatique par leur capacité à subir de grandes déformations sans se rompre, même en la présence d'une amorce de fissure.

Pour minimiser l'action de l'ozone sur des compositions de caoutchouc, il est connu d'utiliser des copolymères présentant une sensibilité moindre à l'oxydation, comme par exemple les élastomères diéniques fortement saturés, élastomères comprenant des unités éthylène à un taux molaire supérieur à 50% en mole des unités monomère de l'élastomère. On peut citer par exemple les copolymères d'éthylène et de 1,3-diène qui contiennent plus de 50% en mole d'éthylène, en particulier les copolymères d'éthylène et de 1,3-butadiène. L'utilisation de tels copolymères d'éthylène et de 1,3-butadiène dans une bande de roulement d'un pneumatique est par exemple décrite dans le document WO 2014114607 A1 et a pour effet de conférer de bonnes propriétés de résistance à l'usure et de résistance au roulement au pneumatique. L'utilisation de copolymères d'éthylène et de 1,3-diène dans une composition pour flanc est aussi par exemple décrite dans le document EP 2 682 423 A1 pour augmenter la résistance à l'ozone. Toutefois, il demeure avantageux d'améliorer davantage la résistance à la fatigue, et ce sans dégrader les autres propriétés de la composition, en particulier la rigidité et la résistance au roulement.

Poursuivant ses recherches, la Demanderesse a découvert que l'utilisation d'un plastifiant spécifique dans une composition de caoutchouc comprenant un copolymère fortement saturé à base d'unités éthylène et d'unités diéniques, permet, d'améliorer la résistance à la fatigue de la composition de caoutchouc, sans pénaliser la rigidité, ni même la résistance au roulement.

Ainsi, un premier objet de l'invention est une composition de caoutchouc à base d'au moins :

- une matrice élastomère contenant au moins un polyisoprène et au moins un copolymère contenant des unités éthylène et des unités diéniques,
- une huile paraffinique présentant une température de transition vitreuse, Tg, inférieure à -75°C,
- une charge renforçante comprenant du noir de carbone, et
- un système de réticulation,

dans laquelle, l'au moins un polyisoprène et l'au moins un copolymère contenant des unités éthylène et des unités diéniques représentent plus de 40% en masse de la matrice élastomère.

Un autre objet de l'invention est un pneumatique comprenant une composition selon l'invention.

### I- DÉFINITIONS

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la

composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

### II-1 Matrice élastomère

Selon l'invention, la matrice élastomère comprend plus de 40% en masse d'au moins un polyisoprène et au moins un copolymère contenant des unités éthylène et des unités diéniques (ci-après dénommé « le copolymère »).

Par « matrice élastomère », on entend l'ensemble des élastomères de la composition.

Par « copolymère contenant des unités éthylène et des unités diéniques », on entend tout copolymère comprenant, au sein de sa structure, au moins des unités éthylène et des unités diéniques. Le copolymère peut ainsi comprendre des unités monomères différentes des unités éthylène et des unités diéniques. Par exemple, le copolymère peut comprendre également des unités alpha-oléfine, notamment des unités alpha-oléfines ayant de 3 à 18 atomes de carbone, avantageusement ayant 3 à 6 atomes de carbone. Par exemple, les unités alpha-oléfines peuvent être choisies dans le groupe constitué par le propylène, le butène, le pentène, l'hexène ou leurs mélanges.

De manière connue, l'expression « unité éthylène » fait référence au motif $-(CH_2-CH_2)-$résultant de l'insertion de l'éthylène dans la chaîne élastomère.

On entend « par unité diénique », une unité monomère issue de l'insertion d'un motif monomère résultant de la polymérisation d'un monomère diène conjugué ou d'un monomère diène non conjugué, l'unité diénique comportant une double liaison carbone-carbone. De préférence, les unités diéniques sont choisies dans le groupe constitué par les unités butadiènes, les unités isoprènes et les mélanges de ces unités diéniques. En particulier, les unités diéniques du copolymère peuvent être des unités 1,3-diène ayant 4 à 12 atomes de carbone, par exemple des unités 1,3-butadiène, 2-méthyl-1,3-butadiène. De préférence encore, les unités diéniques sont majoritairement, voire préférentiellement exclusivement, des unités 1,3-butadiène.

Dans le copolymère, les unités éthylène représentent avantageusement entre 50% et 95% en mole des unités monomères du copolymère, c'est-à-dire entre 50% et 95% en moles des unités monomères du copolymère. Avantageusement, les unités éthylène dans le copolymère représentent plus de 60%, de préférence plus de 70%, en mole des

unités monomères du copolymère. De manière avantageuse également, dans le copolymère, les unités éthylène représentent au plus 90% en mole, de préférence au plus 85% en mole, des unités monomères du copolymère.

Avantageusement, le copolymère (c'est-à-dire pour rappel l'au moins un copolymère contenant des unités éthylène et des unités diéniques) est un copolymère d'éthylène et de 1,3-diène (de préférence de 1,3-butadiène), c'est-à-dire, selon l'invention, un copolymère constitué exclusivement d'unités éthylène et d'unité 1,3-diène (de préférence de 1,3-butadiène), plus préférentiellement un copolymère d'éthylène et de 1,3-diène (de préférence de 1,3-butadiène) statistique.

Lorsque le copolymère est un copolymère d'éthylène et d'un 1,3-diène, celui-ci contient avantageusement des unités de formule (I) et/ou (II). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

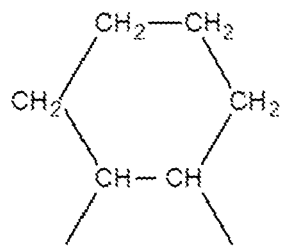

(I)

$-CH_2-CH(CH=CH_2)-$ (II)

Par exemple, le copolymère d'éthylène et d'un 1,3-diène peut être dépourvu d'unités de formule (I). Dans ce cas, il contient de préférence des unités de formule (II).

Lorsque le copolymère d'éthylène et d'un 1,3-diène comprend des unités de formule (I) ou des unités de formule (II) ou encore des unités de formule (I) et des unités de formule (II), les pourcentages molaires des unités de formule (I) et des unités de formule (II) dans l'élastomère diénique fortement saturé, respectivement o et p, satisfont de préférence à l'équation suivante (eq. 1), de manière plus préférentielle à l'équation (eq. 2), o et p étant calculés sur la base de l'ensemble des unités monomères de l'élastomère diénique fortement saturé.

$$0 < o+p \leq 25 \qquad \text{(eq. 1)}$$

$$0 < o+p < 20 \qquad \text{(eq. 2)}$$

Selon l'invention, le copolymère, de préférence le copolymère d'éthylène et d'un 1,3-diène (de préférence de 1,3-butadiène), est un copolymère statistique.

Avantageusement, la masse moyenne en nombre (Mn) du copolymère, de préférence du copolymère d'éthylène et d'un 1,3-diène (de préférence de 1,3-butadiène) est comprise dans un domaine allant de 100 000 à 300 000 g/mol, de préférence de 150 000 à 250 000 g/mol.

La Mn du copolymère est déterminée de manière connue, par chromatographie d'exclusion stérique (SEC) telle que décrite ci-dessous :

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE. Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection. L'appareillage utilisé est une chaîne chromatographique "WATERS Acquity" ou "WATERS Alliance". Le solvant d'élution est le tétrahydrofurane avec antioxydant de type BHT (hydroxytoluène butylé) de 250 ppm, le débit est de 1 $mL.min^{-1}$, la température des colonnes est de 35° C et la durée d'analyse de 40 min. Les colonnes utilisées sont un jeu de trois colonnes Agilent de dénomination commerciale "InfinityLab PolyPore". Le volume injecté de la solution de l'échantillon est 100 $\mu$L. Le détecteur est un réfractomètre différentiel

"réfractomètre Acquity" ou "WATERS 2410" et le logiciel d'exploitation des données chromatographiques est le système "WATERS EMPOWER". Les masses molaires moyennes calculées sont relatives à une courbe d'étalonnage réalisée à partir de polystyrènes étalon.

Le copolymère peut être obtenu selon différentes méthodes de synthèses connues de l'homme du métier, notamment en fonction de la microstructure visée de l'élastomère diénique fortement saturé. Généralement, il peut être préparé par copolymérisation au moins d'un diène, de préférence d'un 1,3-diène, de préférence encore le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. Le copolymère, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Le copolymère peut être constitué d'un mélange de copolymères contenant des unités éthylène et des unités diéniques qui se différencient des uns des autres par leurs microstructures et/ou par leurs macrostructures.

Comme indiqué ci-dessus, la matrice élastomère de la composition selon l'invention contient également un polyisoprène. Le polyisoprène peut être un élastomère de toute microstructure.

Avantageusement, le polyisoprène, de préférence présentant un taux massique de liaison 1,4-cis d'au moins 90% de la masse du polyisoprène, est un caoutchouc naturel, un polyisoprène de synthèse ou un de leurs mélanges. De préférence encore, le polyisoprène, de préférence présentant un taux massique de liaison 1,4-cis d'au moins 90% de la masse du polyisoprène, est un caoutchouc naturel.

Le taux du copolymère, de préférence le copolymère d'éthylène et de 1,3-diène (de préférence de 1,3-butadiène), dans la composition, peut être inférieur à 50 pce, de préférence compris dans un domaine allant de 15 à moins de 45 pce, de préférence encore compris dans un domaine allant de 20 à 40 pce.

Par ailleurs, le taux de polyisoprène, de préférence de caoutchouc naturel, dans la composition peut être supérieur à 50 pce, de préférence, compris dans un domaine allant de plus de 55 pce à 80 pce, de préférence encore compris dans un domaine allant de 60 à 80 pce.

Selon l'invention, la matrice élastomère peut comprendre au moins un autre élastomère, qui n'est pas un polyisoprène ou un copolymère contenant des unités éthylène et des unités diéniques, mais cela n'est pas nécessaire. Ainsi, préférentiellement, l'au moins un polyisoprène et au moins un copolymère contenant des unités éthylène et des unités diéniques représentent plus de 50%, de préférence plus de 60%, de préférence plus de 70%, de préférence plus de 80%, de préférence plus de 90% en masse de la matrice élastomère. Avantageusement, l'au moins un polyisoprène et au moins un copolymère contenant des unités éthylène et des unités diéniques sont les seuls élastomères de la composition, c'est-à-dire qu'ils représentent 100% en masse de la matrice élastomère.

Lorsque la matrice élastomère comprend au moins un autre élastomère, qui n'est pas un polyisoprène ou un copolymère contenant des unités éthylène et des unités diéniques, l'au moins un autre élastomère peut représenter moins de 50%, de préférence moins de 40%, de préférence moins de 30%, de préférence moins de 20%, de préférence moins de 10%, en masse de la matrice élastomère. L'autre élastomère peut être tout élastomère diénique bien connu de l'homme du métier qui n'est pas un polyisoprène ou un copolymère contenant des unités éthylène et des unités diéniques.

II-2 Plastifiant liquide

Selon l'invention, la composition de caoutchouc est à base d'au moins huile paraffinique présentant une température de transition vitreuse (Tg) inférieure à -75°C.

L'huile paraffinique, peut être toute huile paraffinique, bien connue de l'homme du métier, mais à condition que cette huile présente une Tg, inférieure à -75°C. Il peut également d'agir d'un mélange de plusieurs huiles paraffiniques présentant une Tg inférieure à -75°C.

Les huiles paraffiniques sont des plastifiants liquides à 20 °C, dit à « basse Tg », connus pour leurs propriétés plastifiantes vis-à-vis d'élastomères. A température ambiante (20°C), les plastifiants à basse Tg, plus ou moins visqueux, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante. Les « huiles » paraffiniques ne doivent pas non plus être confondues avec des « cires » paraffiniques qui ne sont pas liquides à températures ambiantes.

Avantageusement, la Tg de l'huile paraffinique est comprise dans un domaine allant de -78°C à -150°C, de préférence de -80°C à -120°C.

Par ailleurs, l'huile paraffinique utilisable selon l'invention peut être définie selon son taux de cristallinité. Avantageusement, l'huile paraffinique présente un taux de cristallinité inférieur à 20%, de préférence inférieure à 10%, de préférence encore inférieur à 5%, mesurée par analyse calorimétrique différentielle pour une température de 20°C.

La norme ISO 1-1357-3 (2013) est utilisée pour déterminer la température et l'enthalpie de fusion et de cristallisation des polymères utilisés par analyse calorimétrique différentielle (DSC). L'enthalpie de référence du polyéthylène est de 277,1 J/g (d'après Hanbook of Polymer 4th édition, J. BRANDRUP, E. H. IMMERGUT, and E. A. GRULKE, 1999).

Pour les besoins de l'invention, le taux de l'huile paraffinique est compris dans un domaine allant de 5 à 60 pce, de préférence de 10 à 45 pce.

A titre d'exemples d'huiles paraffiniques présentant une Tg inférieure à -75°C et disponibles dans le commerce, on peut citer les huiles «Extensoil51» de la société REPSOL ou « Tudalen 1968 » de la société Hansen & Rosenthal.

La composition selon l'invention peut comprendre un plastifiant liquide à 20°C différent de l'huile paraffinique présentant une Tg inférieure à -75°C (dénommé « autre plastifiant liquide» ci-après), mais cela n'est ni obligatoire, ni préféré.

De préférence, le taux total de plastifiant liquide à 20°C dans la composition est compris dans un domaine allant de 5 à 60 pce, de préférence de 10 à 45 pce.

En outre, la composition selon l'invention ne comprend avantageusement pas de plastifiant liquide à 20°C autre que l'huile paraffinique, ou en contient moins de 15 pce, de préférence moins de 10 pce, de préférence moins de 5 pce.

De manière particulièrement préférée, l'huile paraffinique présentant une Tg inférieure à -75°C est le seul plastifiant liquide à 20°C de la composition selon l'invention.

II-3 Charge renforçante

La composition de caoutchouc conforme à l'invention a pour autre caractéristique essentielle de comprendre une charge renforçante comprenant du noir de carbone.

La composition de caoutchouc peut comprendre tout autre type de charge dite renforçante, connue pour ses capacités à renforcer une composition de caoutchouc utilisable pour la fabrication de pneumatiques, par exemple une charge organique autre que du noir de carbone, une charge inorganique renforçante telle que de la silice à laquelle est associé de manière connue un agent de couplage. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le taux de charge renforçante est ajustée par l'homme du métier en fonction de l'usage de la composition de caoutchouc. Avantageusement, le taux de charge renforçante, dans la composition selon l'invention, est compris dans un domaine allant de 20 à 80 pce, de préférence de 25 pce à 65 pce, de préférence de 25 à 49 pce.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Avantageusement, le noir de carbone présente une surface spécifique BET comprise dans un domaine allant de 30 à 100 $m^2/g$, de préférence de 33 à 70 $m^2/g$, de préférence encore de 35 à 50 $m^2/g$. La surface spécifique BET peut être mesurée selon la norme ASTM D6556-09 [méthode multipoints (5 points) - gaz : azote - domaine de pression relative P/P0 : 0.05 à 0.30].

Avantageusement, la charge renforçante comprenant majoritairement, de préférence exclusivement, du noir de carbone. En particulier, la charge renforçante est de préférence constituée d'au moins 80% en poids, de préférence d'au moins 90% en poids de noir de carbone. De manière particulièrement préférée, la charge renforçante comprend exclusivement, c'est-à-dire 100% en poids, de noir de carbone.

Le taux de noir de carbone, dans la composition selon l'invention, est préférentiellement compris dans un domaine allant de 20 à 80 pce, de préférence de 25 pce à 65 pce, de préférence de 25 à 49 pce. Le noir de carbone peut être un mélange de différents noirs de carbone, auquel cas les taux de noir de carbone se rapportent à l'ensemble des noirs de carbone.

Lorsqu'une charge inorganique renforçante est utilisée, il peut s'agir notamment des charges minérales du type siliceux, préférentiellement la silice ($SiO_2$) ou du type alumineux, en particulier l'alumine ($Al_2O_3$). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode

volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Par « charge inorganique renforçante », doit être entendue ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes hydroxyle (-OH) à leur surface.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil®1165MP », « Zeosil® Premium 200MP », « Zeosil® HRS 1200 MP » de la Société Solvay. A titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge inorganique renforçante peut être un mélange de différentes charges inorganiques renforçantes, auquel cas les proportions de charge inorganique renforçante dans la charge renforçante se rapportent à l'ensemble des charges inorganiques renforçantes.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

Lorsqu'une charge inorganique renforçante est utilisée, la teneur en agent de couplage dans la composition de l'invention peut aisément être ajustée par l'homme du métier. Typiquement le taux d'agent de couplage représente de 0,5% à 15% en poids par rapport à la quantité de charge inorganique renforçante.

II-4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0.3 pce et 10 pce, plus préférentiellement entre 0.3 et 5 pce. L'accélérateur primaire de vulcanisation est utilisé à un taux préférentiel compris entre 0.5 et 10 pce, plus préférentiellement compris entre 0.5 et 5 pce.

On peut utiliser comme accélérateur tout composé susceptible d'agir comme accélérateur de vulcanisation

des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

## II-5 Additifs possibles

Les compositions de caoutchouc selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

Toutefois, de manière particulièrement avantageuse, la composition selon l'invention ne comprend pas d'autre plastifiant que ceux précités ou en comprend moins de 20 pce, de préférence moins de 10 pce, de préférence moins de 5 pce.

Avantageusement, la composition selon l'invention ne comprend pas de résine plastifiante hydrocarbonée.

## II-6 Préparation des compositions de caoutchouc

Les compositions conformes à l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme flanc de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

II-7 Pneumatique

La présente invention a également pour objet un pneumatique comprenant une composition de caoutchouc selon l'invention.

De préférence, la composition selon l'invention est présente au moins dans un flanc du pneumatique selon l'invention. Avantageusement, cette composition est présente exclusivement dans les flancs du pneumatique.

Le pneumatique selon l'invention peut être destiné à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

**III - EXEMPLES**

IV-1 Mesures et tests utilisés

Test de fatigue

La résistance à la fatigue, exprimée en nombre de cycle ou en unité relative (u.r), est mesurée de manière connue sur 12 éprouvettes soumises à des tractions répétées de faible fréquence jusqu'à un allongement de 75%, à 60°C, à l'aide d'un appareil Monsanto (type « MFTR ») jusqu'à rupture de l'éprouvette, selon les normes ASTM D4482-85 et ISO 6943.

Le résultat est exprimé en unité relative (u.r). Une valeur supérieure à celle du témoin, arbitrairement fixée à 100, indique un résultat amélioré c'est-à-dire une meilleure résistance à la fatigue des échantillons de caoutchouc.

Propriétés dynamiques

La propriété dynamique tan(δ)max est mesurée sur un viscoanalyseur (Metravib V A4000), selon la norme ASTM D5992-96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz selon la norme ASTM D 1349-99 à une température de 60°C. On effectue un balayage en amplitude de déformation crête à crête de 0,1 à 50% (cycle aller), puis de 50% à 1 % (cycle retour). Le résultat exploité est le facteur de perte (tan δ). Pour le cycle retour, on indique la valeur maximale de tan δ observée (tan(δ)max). On enregistre également la réponse d'un échantillon de composition vulcanisée soumis à une sollicitation sinusoïdale en cisaillement simple alterné lors d'un balayage en température, soumis à une sollicitation sinusoïdale à contrainte imposée de 0,7 MPa et à une fréquence de 10 Hz, à une température de 60°C et on mesure le module complexe de cisaillement dynamique (G*) à 60°C.

Pour plus de lisibilité, les résultats sont indiqués en base 100 (pourcentage), la valeur 100 étant attribuée au témoin. Un résultat supérieur à 100 indiquant une amélioration de la performance concernée. Pour « tan(δ)max », un résultat supérieur à 100 indique une diminution de l'hystérèse et donc une meilleure résistance au roulement. Pour « G* », un résultat supérieur à 100 indique une diminution du module complexe de cisaillement dynamique G* ce qui signifie que la rigidité est plus basse et donc améliorée dans le cas d'une utilisation dans des flancs de pneumatiques.

IV-2 Préparation des compositions

Dans les exemples qui suivent, les compositions caoutchouteuses ont été réalisées comme décrit au point II.6 ci-dessus. En particulier, la phase « non-productive » a été réalisée dans un mélangeur de 0,4 litres pendant 6 minutes, pour une vitesse moyenne de palettes de 50 tours par minute jusqu'à atteindre une température maximale de tombée de 160°C. La phase « productive » a été réalisée dans un outil à cylindre à 23°C pendant 10 minutes.

La réticulation de la composition a été conduite à une température comprise entre 130°C et 200°C, sous pression.

IV-3 Essais de caoutchouterie

Les exemples présentés ci-dessous ont pour objet de comparer le compromis de performance entre la résistance à la fatigue et la résistance au roulement d'une composition conforme à l'invention (C1) avec deux compositions témoin (T1 et T2).

Le Tableau 1 présente les compositions testées (en pce), ainsi que les résultats obtenus.

Les résultats de performance sont exprimés en pourcentage base 100 par rapport à la composition témoin T1,

correspondant à une composition usuelle de flanc.

[Tableau 1]

| | T1 | T2 | C1 |
|---|---|---|---|
| NR(1) | 60 | 60 | 60 |
| EBR(2) | 40 | 40 | 40 |
| N330(3) | 29 | 29 | 29 |
| Plastifiant liquide 1(4) | 20 | - | - |
| Plastifiant liquide 2(5) | - | 20 | - |
| Plastifiant liquide 3(6) | - | - | 20 |
| Anti-oxydant(7) | 3,0 | 3,0 | 3,0 |
| TMQ(8) | 1,0 | 1,0 | 1,0 |
| ZnO | 3,0 | 3,0 | 3,0 |
| Acide stéarique | 2,0 | 2,0 | 2,0 |
| Accélérateur(9) | 1,0 | 1,0 | 1,0 |
| Soufre | 2,0 | 2,0 | 2,0 |
| Fatigue (MFTR) | 100 | 158 | 183 |
| G* à 60°C ; 0,7 MPa | 100 | 42 | 102 |

(1) Caoutchouc naturel
(2) Elastomère à 79% en mole d'unité éthylène, 7% en mole d'unité 1,2-cyclohexanediyle, 8% en mole de motif 1,2 de la partie butadiénique, 6% en mole de motif 1,4 de la partie butadiénique
(3) Noir de carbone de grade N330 selon la norme ASTM D-1765
(4) Trioléate de glycérol (huile de tournesol à 85% en poids d'acide oléique) « Lubrirob Tod 1880 » de la société Novance (Tg = -90°C)
(5) Trioctyl phosphate (tri-2-ethylhexyl phosphate) « Disflamoll TOF » de la société Lanxess(Tg = - 110°C)
(6) Huile paraffinique « Extensoil 51 » de la société Repsol(Tg = -80°C)
(7) N-1,3-diméthylbutyl-N-phénylparaphénylènediamine « Santoflex 6-PPD » de la société Flexsys
(8) 2,2,4-triméthyl-1,2-dihydroquinoline « Pilnox TMQ » de la société Nocil
(9) N-cyclohexyl-2-benzothiazyle sulfénamide « Santocure CBS » de la société Flexsys

Les résultats présentés dans le Tableau 1 ci-dessus montrent que la composition témoin T2 permet d'améliorer la résistance à la fatigue par rapport à la composition témoin T1, mais au détriment de la rigidité de la composition. En revanche, la résistance à la fatigue des compositions conformes à l'invention est grandement améliorée par rapport aux compositions témoin, et ce, sans pénaliser la rigidité de la composition. Il a en outre été constaté (données non présentées) que l'hystérèse des compositions conformes à l'invention n'était pas pénalisé par rapport à la composition témoin T1.

## Revendications

**1.** Composition de caoutchouc à base d'au moins :

- une matrice élastomère contenant au moins un polyisoprène et au moins un copolymère contenant des unités éthylène et des unités diéniques,
- une huile paraffinique présentant une température de transition vitreuse, Tg, inférieure à -75°C, mesurée par DSC (Differential Scanning Calorimetry) selon la norme ASTM D3418 (1999),
- une charge renforçante comprenant du noir de carbone, et
- un système de réticulation,

dans laquelle, l'au moins un polyisoprène et l'au moins un copolymère contenant des unités éthylène et des unités

diéniques représentent plus de 40% en masse de la matrice élastomère.

2. Composition de caoutchouc selon la revendication 1, dans laquelle le copolymère contenant des unités éthylène et des unités diéniques est un copolymère d'éthylène et de 1,3-diène.

3. Composition de caoutchouc selon la revendication 2, dans laquelle les unités éthylène dans le copolymère représentent entre 50% et 95% en mole des unités monomères du copolymère.

4. Composition de caoutchouc selon l'une quelconque des revendications 2 et 3, dans laquelle le 1,3-diène est le 1,3-butadiène.

5. Composition de caoutchouc selon l'une quelconque des revendications précédentes, dans laquelle le copolymère est statistique.

6. Composition de caoutchouc selon l'une quelconque des revendications précédentes, dans laquelle le taux du copolymère contenant des unités éthylène et des unités diéniques est inférieur à 50 pce, de préférence compris dans un domaine allant de 15 à moins de 45 pce.

7. Composition de caoutchouc selon l'une quelconque des revendications précédentes, dans laquelle le polyisoprène est du caoutchouc naturel, un polyisoprène de synthèse ou un de leurs mélanges, de préférence du caoutchouc naturel.

8. Composition de caoutchouc selon l'une quelconque des revendications précédentes, dans laquelle le taux de caoutchouc naturel est supérieur à 50 pce, de préférence, compris dans un domaine allant de plus de 55 pce à 80 pce.

9. Composition de caoutchouc selon l'une quelconque des revendications précédentes, dans laquelle l'huile paraffinique présente une Tg comprise dans un domaine allant de -78°C à -150°C, de préférence de -80°C à -120°C.

10. Composition de caoutchouc selon l'une quelconque des revendications précédentes, dans laquelle l'huile paraffinique présente un taux de cristallinité inférieur à 20%, de préférence inférieur à 10%, de préférence encore inférieur à 5%, mesuré par analyse calorimétrique différentielle selon la norme ISO 11357-3-2013 à une température de 20°C.

11. Composition de caoutchouc selon l'une quelconque des revendications précédentes, dans laquelle le taux de l'huile paraffinique est compris dans un domaine allant de 5 à 60 pce, de préférence de 10 à 45 pce.

12. Composition de caoutchouc selon l'une quelconque des revendications précédentes, dans laquelle la charge renforçante comprend majoritairement, de préférence exclusivement, du noir de carbone.

13. Composition de caoutchouc selon l'une quelconque des revendications précédentes, dans laquelle le taux total de charge renforçante est compris dans un domaine allant de 25 pce à 65 pce, de préférence de 25 à 49 pce.

14. Pneumatique comprenant une composition de caoutchouc définie à l'une quelconque des revendications 1 à 13.

15. Pneumatique selon la revendication 14, dans lequel la composition de caoutchouc définie à l'une quelconque des revendications 1 à 13 est présente dans au moins un flanc du pneumatique.

**Patentansprüche**

1. Kautschukzusammensetzung auf Basis von mindestens:

   - einer elastomeren Matrix, die mindestens ein Polyisopren und mindestens ein Ethyleneinheiten und Dieneinheiten enthaltendes Copolymer enthält,
   - einem Paraffinöl mit einer durch DSC (Differential Scanning Calorimetry) gemäß der ASTM-Norm D3418 (1999) gemessenen Glasübergangstemperatur Tg von weniger als -75 °C,
   - einem vernetzenden Füllstoff, der Ruß umfasst, und
   - einem Vernetzungssystem,

wobei das mindestens eine Polyisopren und das mindestens eine Ethyleneinheiten und Dieneinheiten enthaltende Copolymer mehr als 40 Massen-% der Elastomermatrix ausmachen.

**2.** Kautschukzusammensetzung nach Anspruch 1, wobei es sich bei dem Ethyleneinheiten und Dieneinheiten enthaltenden Copolymer um ein Ethylen-1,3-Dien-Copolymer handelt.

**3.** Kautschukzusammensetzung nach Anspruch 2, wobei die Ethyleneinheiten in dem Copolymer zwischen 50 und 95 Mol-% der Monomereinheiten des Copolymers ausmachen.

**4.** Kautschukzusammensetzung nach einem der Ansprüche 2 und 3, wobei es sich bei dem 1,3-Dien um 1,3-Butadien handelt.

**5.** Kautschukzusammensetzung nach einem der vorhergehenden Ansprüche, wobei das Copolymer statistisch ist.

**6.** Kautschukzusammensetzung nach einem der vorhergehenden Ansprüche, wobei der Gehalt des Ethyleneinheiten und Dieneinheiten enthaltenden Copolymers kleiner als 50 phe ist und vorzugsweise in einem Bereich von 15 bis weniger als 45 phe liegt.

**7.** Kautschukzusammensetzung nach einem der vorhergehenden Ansprüche, wobei es sich bei dem Polyisopren um Naturkautschuk, ein synthetisches Polyisopren oder eine Mischung davon, vorzugsweise Naturkautschuk, handelt.

**8.** Kautschukzusammensetzung nach einem der vorhergehenden Ansprüche, wobei der Gehalt an Naturkautschuk größer als 50 phe ist und vorzugsweise in einem Bereich von mehr als 55 phe bis 80 phe liegt.

**9.** Kautschukzusammensetzung nach einem der vorhergehenden Ansprüche, wobei das Paraffinöl eine Tg in einem Bereich von -78 °C bis -150 °C, vorzugsweise von -80 °C bis -120 °C, aufweist.

**10.** Kautschukzusammensetzung nach einem der vorhergehenden Ansprüche, wobei das Paraffinöl einen durch dynamische Differenz-Thermoanalyse gemäß der ISO-Norm 11357-3-2013 bei einer Temperatur von 20 °C gemessenen Kristallinitätsgrad von weniger als 20 %, vorzugsweise weniger als 10 %, weiter bevorzugt weniger als 5 %, aufweist.

**11.** Kautschukzusammensetzung nach einem der vorhergehenden Ansprüche, wobei der Gehalt an Paraffinöl in einem Bereich von 5 bis 60 phe, vorzugsweise von 10 bis 45 phe, liegt.

**12.** Kautschukzusammensetzung nach einem der vorhergehenden Ansprüche, wobei der verstärkende Füllstoff hauptsächlich, vorzugsweise ausschließlich, Ruß umfasst.

**13.** Kautschukzusammensetzung nach einem der vorhergehenden Ansprüche, wobei der Gehalt an verstärkendem Füllstoff in einem Bereich von 25 bis 65 phe, vorzugsweise von 25 bis 49 phe, liegt.

**14.** Reifen, umfassend eine Kautschukzusammensetzung gemäß einem der Ansprüche 1 bis 13.

**15.** Reifen nach Anspruch 14, wobei die Kautschukzusammensetzung gemäß einem der Ansprüche 1 bis 13 in mindestens einer Seitenwand des Reifens vorliegt.

## Claims

**1.** Rubber composition based on at least:

- an elastomer matrix containing at least one polyisoprene and at least one copolymer containing ethylene units and diene units,
- a paraffin oil having a glass transition temperature, Tg, of less than -75°C, measured by DSC (Differential Scanning Calorimetry) according to Standard ASTM D3418 (1999),
- a reinforcing filler comprising carbon black, and
- a crosslinking system,

in which the at least one polyisoprene and the at least one copolymer containing ethylene units and diene units

represent more than 40% by weight of the elastomer matrix.

2. Rubber composition according to Claim 1, wherein the copolymer containing ethylene units and diene units is a copolymer of ethylene and of 1,3-diene.

3. Rubber composition according to Claim 2, wherein the ethylene units in the copolymer represent between 50 mol% and 95 mol% of the monomer units of the copolymer.

4. Rubber composition according to either one of Claims 2 and 3, wherein the 1,3-diene is 1,3-butadiene.

5. Rubber composition according to any one of the preceding claims, wherein the copolymer is a random copolymer.

6. Rubber composition according to any one of the preceding claims, wherein the content of the copolymer containing ethylene units and diene units is less than 50 phr, preferably within a range extending from 15 to less than 45 phr.

7. Rubber composition according to any one of the preceding claims, wherein the polyisoprene is natural rubber, a synthetic polyisoprene or a mixture thereof, preferably natural rubber.

8. Rubber composition according to any one of the preceding claims, wherein the content of natural rubber is greater than 50 phr, preferably within a range extending from more than 55 phr to 80 phr.

9. Rubber composition according to any one of the preceding claims, wherein the paraffin oil has a Tg within a range extending from -78°C to -150°C, preferably from -80°C to -120°C.

10. Rubber composition according to any one of the preceding claims, wherein the paraffin oil has a degree of crystallinity of less than 20%, preferably less than 10%, more preferably less than 5%, measured by differential scanning calorimetry according to Standard ISO 11357-3-2013 at a temperature of 20°C.

11. Rubber composition according to any one of the preceding claims, wherein the content of paraffin oil is within a range extending from 5 to 60 phr, preferably from 10 to 45 phr.

12. Rubber composition according to any one of the preceding claims, wherein the reinforcing filler predominantly, preferably exclusively, comprises carbon black.

13. Rubber composition according to any one of the preceding claims, wherein the total content of reinforcing filler is within a range extending from 25 phr to 65 phr, preferably from 25 to 49 phr.

14. Tyre comprising a rubber composition defined in any one of Claims 1 to 13.

15. Tyre according to Claim 14, wherein the rubber composition defined in any one of Claims 1 to 13 is present in at least one sidewall of the tyre.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 722977 B1
- EP 547344 B1
- WO 2014114607 A1
- EP 2682423 A1
- EP 1092731 A
- WO 2004035639 A
- WO 2007054223 A
- WO 2007054224 A
- WO 2017093654 A1
- WO 2018020122 A1
- WO 2018020123 A1
- WO 9736724 A2
- WO 9916600 A1
- WO 03016215 A1
- WO 03016387 A1
- WO 0210269 A
- WO 9736724 A
- WO 9916600 A
- EP 0501227 A
- EP 0735088 A
- EP 0810258 A
- WO 0005300 A
- WO 0005301 A

### Littérature non-brevet citée dans la description

- **J. BRANDRUP ; E. H. IMMERGUT ; E. A. GRULKE.** Hanbook of Polymer. 1999
- *The Journal of the American Chemical Society,* Février 1938, vol. 60, 309